(19) Europäisches Patentamt / European Patent Office / Office européen des brevets

(11) **EP 4 502 657 A1**

(12) **EUROPEAN PATENT APPLICATION**
published in accordance with Art. 153(4) EPC

(43) Date of publication:
05.02.2025 Bulletin 2025/06

(21) Application number: 22935609.2

(22) Date of filing: 12.10.2022

(51) International Patent Classification (IPC):
*G01S 17/34* (2020.01)     *G01S 7/481* (2006.01)

(52) Cooperative Patent Classification (CPC):
G01S 7/481; G01S 17/34

(86) International application number:
PCT/JP2022/038078

(87) International publication number:
WO 2023/188478 (05.10.2023 Gazette 2023/40)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 30.03.2022 JP 2022055097

(71) Applicant: Panasonic Intellectual Property Management Co., Ltd.
Osaka-shi, Osaka 540-6207 (JP)

(72) Inventors:
• NARUMI Kenji
  Kadoma-shi, Osaka 571-0057 (JP)
• TAKAGI Hiroyuki
  Kadoma-shi, Osaka 571-0057 (JP)

(74) Representative: Grünecker Patent- und Rechtsanwälte
PartG mbB
Leopoldstraße 4
80802 München (DE)

(54) **MEASUREMENT DEVICE**

(57) A measurement device includes: a light source that emits light; an interference optical system including a beam splitter that splits the light emitted from the light source into reference light and irradiation light for irradiating an object, the interference optical system generating interference light by causing reflected light generated by at least part of the irradiation light being reflected by the object and the reference light to interfere with each other; at least one optical element that emits the at least part of the irradiation light; a first photodetector that detects the interference light; a second photodetector that detects monitoring light that is any one of part of the light emitted from the light source, part of the irradiation light in the interference optical system, or part of the reference light in the interference optical system; and a processing circuit that adjusts the intensity of the irradiation light emitted to the outside according to the intensity of the monitoring light.

FIG. 1

EP 4 502 657 A1

## Description

Technical Field

The present disclosure relates to a measurement device.

Background Art

Conventionally, there is a light detection and ranging (LiDAR) technology for generating measurement data regarding the distance and/or the speed of an object by irradiating the object with light and detecting reflected light from the object. A typical example of a measurement device using the LiDAR technology has a light source, a photodetector, and a processing circuit. The light source emits light for irradiating an object. The photodetector detects a reflected wave from the object and outputs a signal corresponding to a time delay of the reflected wave. The processing circuit generates measurement data regarding the distance and the speed of the object by means of, for example, a frequency modulated continuous wave (FMCW) technology on the basis of the signal output from the photodetector. PTLS 1, 2, and NPL 1 disclose examples of measurement devices using the FMCW technology.

Meanwhile, the intensity of the laser beam emitted from the measurement device to the outside is classified into classes by, for example, Japanese Industrial Standard (JIS) C6802 "Safety of Laser Products". From the standpoint of safety for eyes, i.e., eye safety, it is desirable that the intensity of the laser beam emitted to the outside do not exceed the maximum intensity for class 1.

Citation List

Patent Literature

PTL 1: Japanese Patent No. 6274368
PTL 2: Japanese Unexamined Patent Application Publication No. 2019-45200 Non Patent Literature

NPL 1: Christopher V. P. et. al., OFC2016, W4E.3

Summary of Invention

Technical Problem

The present disclosure provides a measurement device in which the intensity of light emitted to the outside is appropriately adjusted and in which the distance range in which the distance and/or the speed of an object can be measured is increased.

Solution to Problem

A measurement device according to an aspect of the present disclosure includes: a light source that emits light; an interference optical system including a beam splitter that splits the light emitted from the light source into reference light and irradiation light for irradiating an object, the interference optical system generating interference light by causing reflected light generated by at least part of the irradiation light being reflected by the object and the reference light to interfere with each other; at least one optical element that emits the at least part of the irradiation light; a first photodetector that detects the interference light; a second photodetector that detects monitoring light that is any one of part of the light emitted from the light source, part of the irradiation light in the interference optical system, and part of the reference light in the interference optical system; and a processing circuit that adjusts an intensity of the irradiation light to be emitted to an outside according to an intensity of the monitoring light.

Note that general or specific embodiments of the present disclosure may be implemented as a system, a device, a method, an integrated circuit, a computer program, a computer-readable recording medium such as a recording disk, or any selective combination of the system, the device, the method, the integrated circuit, the computer program, and the recording medium. The computer-readable recording medium may include a nonvolatile recording medium, such as a compact disc-read only memory (CD-ROM). The device may include one or more devices. When the device includes two or more devices, the two or more devices may be disposed in one apparatus or may be disposed separately in two or more separate apparatuses.

In this specification and claims, "device" may mean not only one device, but also a system including a plurality of devices.

Advantageous Effects of Invention

The technique of the present disclosure realizes a measurement device in which the intensity of light emitted to the outside is appropriately adjusted and in which the distance range in which the distance and/or the speed of an object can be measured is increased.

Brief Description of Drawings

[Fig. 1] Fig. 1 is a block diagram schematically showing the configuration of a measurement device according to a first exemplary embodiment of the present disclosure.
[Fig. 2] Fig. 2 is a diagram schematically showing changes in the frequencies of reference light and reflected light with time when an object is stationary.

[Fig. 3] Fig. 3 is a flowchart schematically showing an example measurement operation performed by a processing circuit.

[Fig. 4] Fig. 4 is a flowchart schematically showing an example operation performed by a determination circuit.

[Fig. 5] Fig. 5 is a diagram schematically showing an example spectrum of a detection signal.

[Fig. 6] Fig. 6 is a block diagram schematically showing the configuration of a measurement device in a comparative example.

[Fig. 7A] Fig. 7A is a graph showing a spectrum of a detection signal in an example.

[Fig. 7B] Fig. 7B is a graph showing a spectrum of a detection signal in a comparative example.

[Fig. 8] Fig. 8 is a block diagram schematically showing the configuration of a measurement device according to a second exemplary embodiment of the present disclosure.

[Fig. 9] Fig. 9 is a block diagram schematically showing the configuration of a measurement device according to a third exemplary embodiment of the present disclosure.

[Fig. 10] Fig. 10 is a block diagram schematically showing the configuration of a measurement device according to a fourth exemplary embodiment of the present disclosure.

[Fig. 11] Fig. 11 is a block diagram schematically showing the configuration of a measurement device according to a fifth exemplary embodiment of the present disclosure.

[Fig. 12] Fig. 12 is a block diagram schematically showing the configuration of a measurement device according to a sixth exemplary embodiment of the present disclosure.

[Fig. 13] Fig. 13 is a block diagram schematically showing the configuration of a measurement device according to a seventh exemplary embodiment of the present disclosure.

[Fig. 14] Fig. 14 is a block diagram schematically showing the configuration of a measurement device according to an eighth exemplary embodiment of the present disclosure.

[Fig. 15] Fig. 15 is a block diagram schematically showing the configuration of a measurement device according to a ninth exemplary embodiment of the present disclosure.

Description of Embodiments

In the present disclosure, all or some of circuits, units, devices, members, or parts, or all or some of functional blocks in a block diagram may be implemented by one or more electronic circuits including, for example, a semiconductor device, a semiconductor integrated circuit (IC), or a large scale integration (LSI). The LSI or the IC may be integrated into one chip or may be formed by combining a plurality of chips. For example, functional blocks other than a memory element may be integrated into one chip. Although the term "LSI" or "IC" is used here, the term "system LSI", "very large scale integration (VLSI)", or "ultra large scale integration (ULSI)" may be used depending on the degree of integration. A field programmable gate array (FPGA) programmed after the manufacture of the LSI, or a reconfigurable logic device that allows reconfiguring of the connection relationship inside the LSI or setting up of circuit sections inside the LSI can also be used for the same purpose.

Furthermore, all or some of the functions or operations of the circuits, units, devices, members, or parts can be performed by software processing. In that case, the software is recorded in one or more non-transitory recording media such as a ROM, an optical disk, and a hard disk drive. When the software is executed by a processor, the function specified by the software is executed by the processor and a peripheral device. The system or the device may include one or more non-transitory recording media in which the software is recorded, a processor, and a required hardware device, for example, an interface.

In the present disclosure, the term "light" means not only visible light (wavelengths: about 400 nm to about 700 nm), but also electromagnetic waves including ultraviolet rays (wavelengths: about 10 nm to about 400 nm) and infrared rays (wavelengths: about 700 nm to about 1 mm). In this specification, ultraviolet rays are also referred to as "ultraviolet light", and infrared rays are also referred to as "infrared light".

Hereinbelow, exemplary embodiments of the present disclosure will be described. Note that the embodiments described below are all comprehensive or specific examples. Numerical values, shapes, components, positions and connection forms of the components, steps, the order of the steps, and the like described in the following embodiments are merely examples, and are not intended to limit the present disclosure. Furthermore, among the components in the following embodiments, components not described in any of the independent claims indicating the broadest concept are described as arbitrary components. The drawings are schematic views and are not necessarily illustrated accurately. Furthermore, in the drawings, substantially the same components are denoted by the same reference signs, and redundant description may be omitted or simplified.

First, the underlying knowledge forming the basis of the present disclosure will be described. In recent years, the FMCW-LiDAR technology has been developed which achieves both a wide dynamic range and a high resolution with respect to distance, is less likely to be influenced by disturbance, and can detect the speed of an object moving at a high speed. By using light instead of millimeter waves, the spot diameter of light irradiating an object can be made relatively small, making it possible to more accurately acquire measurement data of the object.

In a measurement device using the FMCW-LiDAR technology, internal scattered light may be generated. PTL 1 discloses a method for accurately measuring the distance by using the internal scattered light generated in an optical antenna, which emits light to the outside, as a trigger for starting the measurement. The internal scattered light disclosed in PTL 1 can be used to improve the distance measurement accuracy.

A measurement device using the FMCW-LiDAR technology may be provided with a monitoring photodetector that detects part of light in the measurement device as monitoring light. This makes it possible to check the intensity of the laser beam emitted to the outside from the intensity of the detected monitoring light and to appropriately adjust the intensity of the laser beam emitted to the outside so as not to exceed the maximum intensity for class 1. Meanwhile, the present inventor has found that, depending on the position of the monitoring photodetector, internally scattered light caused by the monitoring photodetector is generated separately from the internally scattered light described above, and such internally scattered light may reduce the distance range in which the distance and/or the speed of the object can be measured.

In a measurement device according to an embodiment of the present disclosure using the FMCW-LiDAR technology, the influence of the internally scattered light caused by the monitoring photodetector can be reduced by appropriately arranging the monitoring photodetector. As a result, it is possible to appropriately adjust the intensity of light emitted to the outside and to increase the distance range in which the distance and/or the speed of an object can be measured. A measurement device according to embodiments of the present disclosure will be described below.

A measurement device according to a first aspect includes: a light source that emits light; an interference optical system including a beam splitter that splits the light emitted from the light source into reference light and irradiation light for irradiating an object, the interference optical system generating interference light by causing reflected light generated by at least part of the irradiation light being reflected by the object and the reference light to interfere with each other; at least one optical element that emits the at least part of the irradiation light; a first photodetector that detects the interference light; a second photodetector that detects monitoring light that is any one of part of the light emitted from the light source, part of the irradiation light in the interference optical system, or part of the reference light in the interference optical system; and a processing circuit that controls an operation of the light source and processes signals from the first photodetector and the second photodetector, the processing circuit causing the light source to change the intensity of the light according to the intensity of the monitoring light.

In this measurement device, it is possible to appropriately adjust the intensity of light emitted to the outside and to increase the distance range in which the distance and/or the speed of an object can be measured.

In the measurement device according to a second aspect, the measurement device according to the first aspect further includes another beam splitter between the light source and the beam splitter. The other beam splitter separates the monitoring light from the light emitted from the light source.

In this measurement device, part of the light emitted from the light source can be used as the monitoring light with the other beam splitter therebetween.

In the measurement device according to a third aspect, in the measurement device according to the first aspect, the second photodetector detects the monitoring light in the light emitted from the light source without another beam splitter therebetween.

In this measurement device, part of the light emitted from the light source can be used as the monitoring light without the other beam splitter therebetween.

In the measurement device according to a fourth aspect, in the measurement device according to the first aspect, the interference optical system further includes another beam splitter. The other beam splitter separates the monitoring light from the irradiation light in the interference optical system.

In this measurement device, part of the irradiation light in the interference optical system can be used as the monitoring light.

In the measurement device according to a fifth aspect, in the measurement device according to the first aspect, the interference optical system further includes another beam splitter. The other beam splitter separates the monitoring light from the reference light in the interference optical system.

In this measurement device, part of the reference light in the interference optical system can be used as the monitoring light.

In the measurement device according to a sixth aspect, in the measurement device according to any one of the first to fifth aspects, the interference optical system includes a circulator or still another beam splitter connected to the beam splitter and the at least one optical element.

In this measurement device, it is possible to generate the interference light with the circulator or the still other beam splitter.

In the measurement device according to a seventh aspect, in the measurement device according to any one of the first to sixth aspects, the at least one optical element includes a plurality of optical elements. Each of the plurality of optical elements emits part of the irradiation light.

In this measurement device, even when there is a plurality of optical elements, it is possible to increase the distance range in which the distance and/or the speed of the object can be measured.

In the measurement device according to an eighth aspect, in the measurement device according to any one of the first to seventh aspects, the at least one optical element receives the reflected light and inputs the reflected light to the interference optical system.

In this measurement device, a coaxial optical system simplifies the configuration and realizes stable measurement.

In the measurement device according to a ninth aspect, the measurement device according to any one of the first to seventh aspects further includes at least one other optical element that receives the reflected light and inputs the reflected light to the interference optical system.

This measurement device does not employ a coaxial optical system, but does not require the optical circulator and the other circulator for generating the interference light. Hence, the manufacturing cost can be reduced.

In the measurement device according to a tenth aspect, in the measurement device according to any one of the first to ninth aspects, the processing circuit includes a determination circuit that performs determination by comparing the intensity of the monitoring light and a predetermined intensity and outputs a restriction signal according to a determination result, and a drive circuit that causes the light source to change an intensity of the light according to the restriction signal.

In this measurement device, it is possible to appropriately adjust the intensity of light emitted to the outside by changing the intensity of light emitted from the light source.

In the measurement device according to an eleventh aspect, the measurement device according to any one of the first to ninth aspects further includes a shutter that opens and closes an optical path of the light emitted from the light source or the irradiation light. The processing circuit includes a determination circuit that performs determination by comparing the intensity of the monitoring light and a predetermined intensity and outputs a restriction signal according to a determination result. The shutter opens and closes the optical path according to the restriction signal.

In this measurement device, it is possible to appropriately adjust the intensity of the light emitted to the outside by opening and closing, with the shutter, the optical path of the light emitted from the light source.

In the measurement device according to a twelfth aspect, in the measurement device according to any one of the first to eleventh aspects, the light source is capable of changing a frequency of the light with time. In this measurement device, in which the processing circuit processes a signal output from the first photodetector, the distance and/or the speed of an object can be measured using the FMCW-LiDAR technology.

First Embodiment

Measurement Device

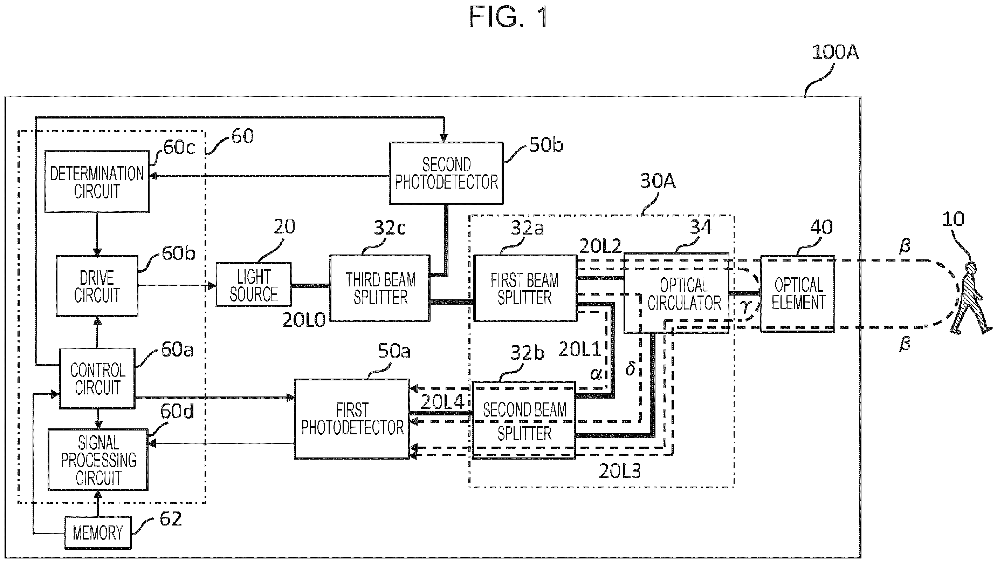

First, an example configuration of a measurement device according to a first embodiment of the present disclosure will be described with reference to Fig. 1. Fig. 1 is a block diagram schematically showing the configuration of the measurement device according to the first exemplary embodiment of the present disclosure. Fig. 1 shows a person as an object 10 to be measured. The object 10 may be any object such as a vehicle or a building, besides a person.

A measurement device 100A shown in Fig. 1 includes a light source 20, an interference optical system 30A, an optical element 40, and a first photodetector 50a. The interference optical system 30A includes a first beam splitter 32a, a second beam splitter 32b, and an optical circulator 34. The measurement device 100A further includes a third beam splitter 32c and a second photodetector 50b. The measurement device 100A further includes a processing circuit 60 that controls the operation of the light source 20 and processes signals from the first photodetector 50a and the second photodetector 50, and a memory 62. The measurement device 100A may further include components other than the components shown in Fig. 1. The bold lines shown in Fig. 1 represent optical fibers connecting two components to each other. The solid lines with arrows shown in Fig. 1 represent transmission and reception of signals. The dashed lines with arrows shown in Fig. 1 represent flows of light. In this specification, the first beam splitter 32a is also simply referred to as "a beam splitter", and the third beam splitter 32c is also referred to as "another beam splitter".

In the measurement device 100A according to the first embodiment, the light in the measurement device 100A can be detected as monitoring light by the third beam splitter 32c and the second photodetector 50b. As a result, it is possible to appropriately adjust the intensity of the irradiation light emitted to the outside according to the intensity of the detected monitoring light. In the measurement device 100A, unlike a measurement device in the comparative example described below, the third beam splitter 32c and the second photodetector 50b do not influence the distance range in which the distance and/or the speed of the object can be measured.

The components of the measurement device 100A will be described below. First, details of the light source 20, the interference optical system 30A, the optical element 40, and the first photodetector 50a, which are used for the FMCW-LiDAR technology in the measurement device 100A, will be described.

Light Source 20

The light source 20 emits a laser beam 20L0. The light source 20 can change the frequency of the laser beam 20L0. The frequency can be changed with time in, for example, a triangular-wave shape or a sawtooth shape, at constant time intervals. The time intervals may be, for example, greater than or equal to 1 $\mu$s and less than or equal to 10 ms. The time intervals may vary. The frequency may be changed in the range of, for example, greater than or equal to 100 MHz and less than or equal to 1 THz.

The wavelength of the laser beam 20L0 may be included in the wavelength range of near-infrared light, which is, for example, greater than or equal to 700 nm and less than or equal to 2000 nm. Sunlight includes near-infrared light and visible light, and the amount of near-infrared light is smaller than the amount of visible light. Hence, by using near-infrared light as the laser beam 20L0, it is possible to reduce the influence of sunlight as noise. The wavelength of the laser beam 20L0 does not necessarily have to be included in the wavelength range of the near-infrared light. The wavelength of the laser beam 20L0 may be included in the wavelength range of visible light, which is greater than or equal to 400 nm and less than or equal to 700 nm, or may be included in the wavelength range of ultraviolet light.

The light source 20 may include, for example, a distributed feedback (DFB) laser diode or an external cavity (EC) laser diode. These laser diodes are inexpensive and compact, are capable of single-mode oscillation, and are capable of modulating the frequency of the laser beam 20L0 in accordance with the amount of current applied. By using a laser diode capable of emitting a high-power laser beam as the light source 20, it is possible to stably modulate the frequency of the laser beam 20L0. However, the intensity of the laser beam 20L0 emitted from the light source 20 is adjusted such that the intensity of the laser beam emitted to the outside does not exceed the maximum intensity for class 1.

The light source 20 is connected to the third beam splitter 32c. An attenuator for adjusting the intensity of the laser beam 20L0 may be disposed between the light source 20 and the third beam splitter 32c.

Interference Optical System 30A

The first beam splitter 32a included in the interference optical system 30A separates the laser beam 20L0 emitted from the light source 20 and passing through the third beam splitter into reference light 20L1 and irradiation light 20L2 for irradiating the object 10. The intensity of the reference light 20L1 may be, for example, 1% or more and 10% or less of the intensity of the laser beam 20L0 input to the first beam splitter 32a. The first beam splitter 32a inputs the reference light 20L1 to the second beam splitter 32b and inputs the irradiation light 20L2 to the optical circulator 34. The first beam splitter 32a is connected to the second beam splitter 32b, the third beam splitter 32c, and the optical circulator 34.

The optical circulator 34 included in the interference optical system 30A inputs the irradiation light 20L2 to the optical element 40 and inputs the reflected light 20L3, generated as a result of the irradiation light 20L2 being reflected by the object 10, to the second beam splitter 32b. The optical circulator 34 is connected to the first beam splitter 32a, the second beam splitter 32b, and the optical element 40.

The second beam splitter 32b included in the interference optical system 30A inputs interference light 20L4, obtained by superimposing the reference light 20L1 and the reflected light 20L3 to produce interference, to the first photodetector 50a. The second beam splitter 32b is connected to the first beam splitter 32a, the optical circulator 34, and the first photodetector 50a.

Optical Element 40

The optical element 40 emits the irradiation light 20L2 to the outside. In addition, the optical element 40 receives the reflected light 20L3 and inputs the reflected light 20L3 to the optical circulator 34 included in the interference optical system 30A. In this specification, the direction in which the irradiation light 20L2 is emitted from the optical element 40 is also referred to as "forward". The optical element 40 may be, for example, a collimator lens that collimates the irradiation light 20L2. In this specification, "collimate" means not only a case where the irradiation light 20L2 is made into parallel light, but also a case where spreading of the irradiation light 20L2 is reduced.

The optical element 40 may be a condenser lens that converges the irradiation light 20L2 or a diffusion lens that diffuses the irradiation light 20L2. The optical element 40 may be a diffraction grating that emits the irradiation light 20L2 to the outside as zeroth-order diffracted light and/or ±Nth-order diffracted light (N is a positive integer). By measuring the distance and the speed of the object 10 with multiple diffracted light emitted in different directions, the angular range in which the distance and/or the speed of the object 10 is measured can be increased. The optical element 40 may have a configuration in which at least two of a collimator lens, a condenser lens, a diffusion lens, and a diffraction grating are combined. In the following description, the optical element 40 is assumed to be a collimator lens.

In the measurement device 100A, the path of the irradiation light 20L2 from the interference optical system 30A to the object 10 and the path of the reflected light 20L3 from the object 10 to the interference optical system 30A overlap each other. By employing a coaxial optical system like this, the configuration of the measurement device 100A can be simplified, and stable measurement can be realized.

First Photodetector 50a

The first photodetector 50a detects the interference light 20L4 and outputs a signal corresponding to the intensity of the interference light 20L4. The first photodetector 50a includes one or more light detecting elements. The light detecting element outputs a signal corresponding to the intensity of the interference light 20L4.

Next, details of the third beam splitter 32c and the second photodetector 50b used for detecting the monitoring light will be described.

Third Beam Splitter 32c

The third beam splitter 32c splits the laser beam 20L0 emitted from the light source 20, inputs part of the split laser beam to the second photodetector 50b, and inputs the remaining part of the split laser beam to the first beam splitter 32a. The intensity of the part of the laser beam 20L0 may be, for example, 1% or more and 10% or less of the intensity of the laser beam 20L0 input to the third beam splitter 32c. The third beam splitter 32c is connected to the light source 20 and the first beam splitter 32a. When the laser beam 20L0 propagates through the air instead of an optical fiber, a beam sampler may be used instead of the third beam splitter 32c.

Second Photodetector 50b

The second photodetector 50b detects monitoring light, which is part of the laser beam 20L0 split by the third beam splitter 32c, and outputs a signal corresponding to the intensity of the monitoring light. By associating the intensity of the monitoring light with the intensity of the irradiation light 20L2 to be emitted to the outside, it is possible to check, from the intensity of the monitoring light, the intensity of the irradiation light 20L2 to be emitted to the outside.

The reason why the intensity of the irradiation light 20L2 to be emitted to the outside is checked is as follows. As described above, a laser diode that can emit a high-power laser beam can be used as the light source 20 from the standpoint of stably modulating the frequency of the laser beam 20L0. When such a laser diode is used, the intensity of the irradiation light 20L2 to be emitted to the outside may exceed the maximum intensity for class 1 due to, for example, a failure or a malfunction. If it is possible to check the intensity of the irradiation light 20L2 to be emitted to the outside, it is possible to adjust the intensity of the laser beam 20L0 emitted from the light source 20 such that the intensity of the irradiation light 20L2 to be emitted to the outside does not exceed the maximum intensity for class 1.

PTLS 1 and 2 and NPTL 1 do not disclose that the frequency of the laser beam 20L0 is stably modulated while using a laser diode that can emit a high-power laser beam. Furthermore, PTLS 1 and 2 and NPTL 1 do not disclose that a monitoring photodetector is provided to check the intensity of the irradiation light 20L2 to be emitted to the outside.

Next, details of the processing circuit 60 that controls the operations of the light source 20, the first photodetector 50a, and the second photodetector 50b will be described.

Processing Circuit 60

The processing circuit 60 includes a control circuit 60a, a drive circuit 60b, a determination circuit 60c, and a signal processing circuit 60d. The control circuit 60a controls the operations of the drive circuit 60b, the signal processing circuit 60d, the first photodetector 50a, and the second photodetector 50b. In this specification, the operation of each of the control circuit 60a, the drive circuit 60b, the determination circuit 60c, and the signal processing circuit 60d may be described as the operation of the processing circuit 60.

The drive circuit 60b drives the light source 20. In other words, the control circuit 60a controls the operation of the light source 20 via the drive circuit 60b. The determination circuit 60c performs determination by comparing the intensity of the monitoring light detected by the second photodetector 50b and a predetermined intensity and outputs a restriction signal according to a determination result. The drive circuit 60b causes the light source 20 to change the intensity of the laser beam 20L0 according to the restriction signal.

The signal processing circuit 60d processes the signal output from the first photodetector 50a by using the FMCW-LiDAR technology. The processing circuit 60 generates and outputs measurement data regarding the distance and/or the speed of the object 10 on the basis of the signal. Specifically, the signal processing circuit 60d performs Fourier transform on the time waveform of the detection signal to generate data indicating the frequency spectrum thereof, and generates and outputs measurement data on the basis of that data.

The signal processing circuit 60d may input the output measurement data to a display, and the display may display information about the distance and/or the speed of the object 10. Alternatively, the signal processing circuit 60d may input the output measurement data to another device, and the other device may perform a specific operation according to the measurement data. The other device may be, for example, a vehicle or an industrial robot.

The operation of the processing circuit 60 will be described in detail below. The computer programs executed by the control circuit 60a and the signal processing circuit 60d are stored in the memory 62, such as a ROM or a RAM (Random Access Memory). As described above, the measurement device 100A includes a processor including the processing circuit 60 and the memory 62. The processing circuit 60 and the memory 62 may be integrated on one circuit board or may be provided on separate circuit boards. The control circuit 60a, the drive circuit 60b, the determination circuit 60c, and the signal processing circuit 60d included in the processing circuit 60 may be distributed in a plurality of circuits. The processor or a portion thereof may be located at a remote location away from the other components and control the operations of the light source 20, the first photodetector 50a, and the second photodetector 50b via a wired or wireless communication network.

FMCW-LiDAR Technology

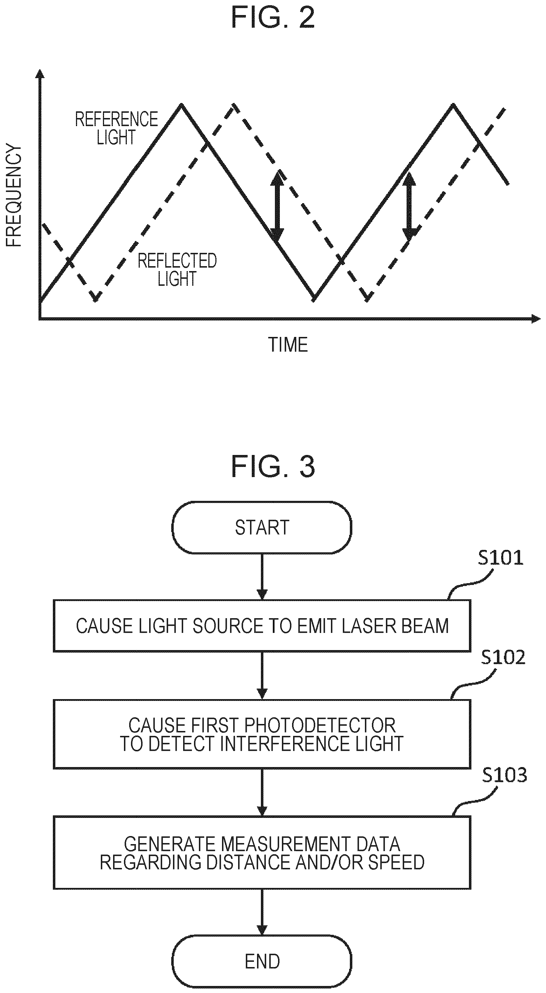

Next, the FMCW-LiDAR technology will be briefly described with reference to Fig. 2. Details of the FMCW-LiDAR technology are disclosed in, for example, NPL 1.

Fig. 2 is a diagram schematically showing changes in the frequencies of the reference light 20L1 and the reflected light 20L3 with time when the object 10 is stationary. The solid line represents the reference light 20L1, and the dashed line represents the reflected light 20L3. The frequency of the reference light 20L1 shown in Fig. 2 repeatedly changes in a triangular-wave shape with time. That is, the frequency of the reference light 20L1 repeats up-chirping and down-chirping. The increment in the frequency during an up-chirp period and the decrement in the frequency during a down-chirp period are equal to each other. The frequency of the reflected light 20L3 is shifted in the positive direction along the time axis, compared with the frequency of the reference light 20L1. The amount of time by which the reflected light 20L3 is shifted is equal to the time required for the irradiation light 20L2 emitted from the measurement device 100A to the outside and reflected by the object 10 to return as the reflected light 20L3. As a result, the interference light 20L4, obtained by superimposing the reference light 20L1 and the reflected light 20L3 to produce interference, has a frequency equivalent to the frequency difference between the frequency of the reflected light 20L3 and the frequency of the reference light 20L1. The double-headed arrows shown in Fig. 2 indicate the frequency difference between the two. The first photodetector 50a outputs a signal indicating the intensity of the interference light 20L4. The signal is called a beat signal. The frequency of the beat signal, i.e., the beat frequency, is equal to the frequency difference. The processing circuit 60 can generate measurement data regarding the distance and/or the speed of the object 10 from the beat frequency.

When the object 10 is stationary, the beat frequency in the up-chirp period and the beat frequency in the down-chirp period are equal to each other. The beat frequency $f_{beat}$ during the up-chirp period or the down-chirp period is expressed by Formula (1) below, where $\Delta f$ is the increment or decrement of the frequency of light during the up-chirp period or the down-chirp period, $\Delta t$ is the time required for $\Delta f$ to change, c is the speed of light, and 2d is the difference between the optical path length of the reference light 20L1 and the sum of the optical path length of the irradiation light 20L2 and the optical path length of the reflected light 20L3.
[Math. 1]

$$f_{beat} = \frac{2\Delta f}{c\Delta t} d \qquad (1)$$

The beat frequency $f_{beat}$ in Formula (1) is obtained by multiplying the rate of change $\Delta f/\Delta t$ of the frequency with respect to time by the time (2d/c) required for the irradiation light 20L2 emitted from the measurement device 100A to the outside and reflected by the object 10 to return as the reflected light 20L3.

When the object 10 moves, the frequency of the reflected light 20L3 is Doppler-shifted in the positive or negative direction along the frequency axis, compared with the frequency of the reference light 20L1. In that case, the beat frequency in the up-chirp period and the beat frequency in the down-chirp period are different from each other. The processing circuit 60 can generate measurement data regarding the speed and the distance of the object 10 from the frequency difference and the average of the beat frequencies, respectively.

Measurement Operation Performed by Processing Circuit 60

Next, an example measurement operation performed by the processing circuit 60 in the first embodiment will be described with reference to Fig. 3. Fig. 3 is a flowchart schematically showing an example measurement operation performed by the processing circuit 60. The processing circuit 60 performs the operations of steps S101 to S103 shown in Fig. 3.

<Step S101>

The processing circuit 60 causes the light source 20 to emit the laser beam 20L0 whose frequency changes with time. Specifically, the control circuit 60a causes the drive circuit 60b to drive the light source 20 so that the light source 20 emits the laser beam 20L0 having a frequency that changes with time.

<Step S102>

The processing circuit 60 causes the first photodetector 50a to detect the interference light 20L4. The first photodetector 50a outputs a signal corresponding to the intensity of the interference light 20L4. Specifically, the control circuit 60a causes the first photodetector 50a to detect the interference light 20L4.

<Step S103>

The processing circuit 60 generates measurement data regarding the distance and/or the speed of the object 10 on the basis of the signal output from the first photodetector 50a. Specifically, the control circuit 60a causes the signal processing circuit 60d to generate measurement data on the basis of the signal output from the first photodetector 50a.

This operation of the processing circuit 60 enables the distance and/or the speed of the object 10 to be measured.

Operation Performed by Determination Circuit 60c

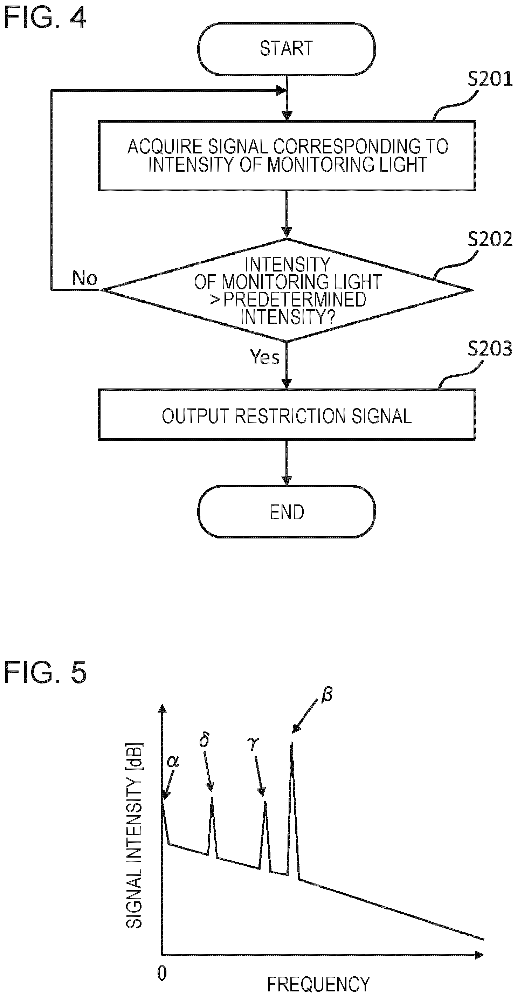

Next, an example operation performed by the determination circuit 60c in the first embodiment will be described with reference to Fig. 4. Fig. 4 is a flowchart schematically showing an example operation performed by the determination circuit 60c. The determination circuit 60c performs the operations of steps S201 to S203 shown in Fig. 4.

<Step S201>

The determination circuit 60c acquires the signal output from the second photodetector 50b.

This signal is a signal corresponding to the intensity of the monitoring light. A transformation may be used to acquire the intensity of the monitoring light from the signal. For example, when it is assumed that the voltage value of the signal is $V_m$, the intensity of the monitoring light is $I_m$, and a coefficient of transformation from the voltage value to the intensity in the second photodetector 50b is k, a relationship $I_m = kV_m$ is established. A current value may be used instead of the voltage value.

<Step S202>

The determination circuit 60c determines whether or not the intensity $I_m$ of the monitoring light is larger than a predetermined intensity $I_s$. The predetermined intensity $I_s$ can be set as follows, for example. When the intensity $I_m$ of the monitoring light is equal to the predetermined intensity $I_s$, the intensity of the irradiation light 20L2 emitted from the optical element 40 to the outside is equal to the maximum intensity for class 1.

When it is assumed that the maximum intensity for class 1 is $I_L$, the intensity ratio of the intensity of the irradiation light 20L2 emitted from the optical element 40 to the outside to the intensity of the laser beam 20L0 emitted from the light source 20 is $\xi$, and the intensity ratio of the intensity of the monitoring light to the intensity of the laser beam 20L0 emitted from the light source 20 is b, the relationship $I_s = b (I_L/\xi)$ is established.

When the determination is No, the determination circuit 60c performs the operation in step S201 again. When the determination is Yes, the determination circuit 60c performs the operation in step S203.

<Step S203>

The determination circuit 60c outputs a restriction signal. The restriction signal is a signal for causing the drive circuit 60b to adjust the intensity of the laser beam 20L0 emitted from the light source 20 in terms of time or energy. The restriction signal may be, for example, one of the following signals (1) to (3).

(1) The restriction signal is a digital signal indicating that the intensity of the irradiation light 20L2 to be emitted to the outside is higher than the maximum intensity for class 1.
(2) The restriction signal is a digital signal or an analog signal indicating the value of the current to be supplied to the light source 20. When a current having this current value is supplied to the light source 20, the intensity of the irradiation light 20L2 to be emitted to the outside does not exceed the maximum intensity for class 1.
(3) The restriction signal is a digital signal or an analog signal indicating the light emission cycle, the light emission duty ratio, and the light emission time of the laser beam 20L0. When the laser beam 20L0 satisfying these light emission cycle, light emission duty ratio, and light emission time is emitted from the light source 20, the intensity of the irradiation light 20L2 to be emitted to the outside does not exceed the maximum intensity for class 1.

The drive circuit 60b causes the light source 20 to change the intensity of the laser beam 20L0 according to the restriction signal. When the restriction signal is the signal (1) above, the drive circuit 60b causes the light source 20 to stop emitting the laser beam 20L0. Alternatively, the drive circuit 60b may cause the light source 20 to reduce the intensity of the laser beam 20L0 such that the intensity of the irradiation light 20L2 to be emitted to the outside does not exceed the maximum intensity for class 1.

The above-described operation of the determination circuit 60c makes it possible to appropriately adjust the irradiation light 20L2 to be emitted to the outside so as not to exceed the maximum intensity for class 1.

Flow of Light in Measurement Device 100A

Reference is made to Fig. 1 again. In the measurement device 100A shown in Fig. 1, a plurality of flows of light are generated, as indicated by the dashed lines with arrows. A flow of light $\alpha$ is a flow of the reference light 20L1 leaving the first beam splitter 32a and reaching the first photodetector 50a. A flow of light $\beta$ is a flow of the irradiation light 20L2 leaving the first beam splitter 32a and reaching the object 10, and is a flow of the reflected light 20L3 leaving the object 10 and reaching the first photodetector 50a.

The plurality of flows of light includes flows of light $\gamma$ and $\delta$ that cause noise in the detection signal, in addition to the flows of light $\alpha$ and $\beta$. The flow of light $\gamma$ is a flow of part of the irradiation light 20L2 leaving the first beam splitter 32a, reflected by the optical element 40, and reaching the first photodetector 50a. This reflection occurs at the interface between the optical element 40 and air. The flow of light $\delta$ is a flow of another part of the irradiation light 20L2 leaving the first beam splitter 32a, passing through a noise light path inside the optical circulator 34, and reaching the first photodetector 50a.

The noise light path is considered to be a path passing through the optical circulator 34, more specifically, a path in the optical circulator 34 through which leakage light of the irradiation light 20L2 traveling toward the optical element 40 travels while being multiply scattered inside.

As described above, part of the irradiation light 20L2 is reflected by the optical element 40, and another part is multiply scattered inside the optical circulator 34. Hence, the remaining part of the irradiation light 20L2 is actually emitted from the optical element 40 to the outside. Note that, in this specification, unless misunderstanding occurs, the description "the optical element 40 emits the irradiation light 20L2 to the outside" is used.

Assume that the optical path length of a first path corresponding to the flow of light $\alpha$ is a first optical path length d1, the optical path length of a second path corresponding to the flow of light $\beta$ is a second optical path length d2, the optical path length of a third path corresponding to the flow of light $\gamma$ is a third optical path length d3, and the optical path length of a fourth path corresponding to the flow of light $\delta$ is a fourth optical path length d4. In the measurement device 100A, the relationship d1 < d4 < d3 < d2 is satisfied. The influence of the optical path lengths of the paths corresponding to the flows of light $\alpha$ to $\delta$ in the measurement device 100A on the distance range in which the distance and/or the speed of the object 10 can be measured is described in detail in Japanese Unexamined Patent Application Publication No. 2022-010910 (filed on January 27, 2022). The entire disclosure of Japanese Unexamined Patent Application Publication No. 2022-010910 is incorporated herein by reference.

The optical circulator 34 and the optical element 40 generate the flows of light $\gamma$ and $\delta$ that cause noise because the optical circulator 34 and the optical element 40 are located on the optical path of the irradiation light 20L2 and the reflected light 20L3. In contrast, the third beam splitter 32c and the second photodetector 50b are not located on the optical path of the irradiation light 20L2 and the reflected light 20L3. Hence, the third beam splitter 32c and the second photodetector 50b do not generate flows of light that cause noise.

Next, referring to Fig. 5, a plurality of peaks appearing in the spectrum of the detection signal due to the flows of light $\alpha$ to $\delta$ will be described. Fig. 5 schematically illustrates an example spectrum of a detection signal. A peak $\alpha$ is a DC (direct current) component included in the detection signal from the first photodetector, and the frequency thereof is zero. A peak $\beta$ has a beat frequency obtained by interference between the reference light 20L1 and the reflected light 20L3 reflected by the object 10 and reaching the first photodetector 50a. A peak $\gamma$ has a beat frequency obtained by interference between the reference light 20L1 and, of the irradiation light 20L2, light reflected by the optical element 40 and reaching the first photodetector 50a. A peak $\delta$ has a beat frequency obtained by interference between the reference light 20L1 and, of the irradiation light 20L2, light passing through the noise light path inside the interference optical system 30A, more specifically, inside the optical circulator 34, and reaching the first photodetector 50a.

A peak $\beta$ is caused by the reflected light 20L3 reflected by the object 10. The peak $\gamma$ is noise and is caused by light, in the irradiation light 20L2, reflected by the optical element 40. Because the object 10 is located in front of the optical element 40, when it is assumed that the position where the optical element 40 reflects the irradiation light 20L2 is zero distance, the peak $\gamma$ serves as the indicator of zero distance, although it is noise. As described above, when d2 > d3, the beat frequency of the peak $\gamma$ is lower than the beat frequency of the peak $\beta$. Hence, the peak $\gamma$ does not influence the peak $\beta$. The peak $\delta$ is noise and is caused by the multiple scattered light generated inside the optical circulator 34. As described above, when d3 > d4, the beat frequency of the peak $\delta$ is lower than the beat frequency of the peak $\gamma$. Hence, the peak $\delta$ does not influence the peak $\gamma$ and the peak $\beta$. Hence, the distance to the object 10 can be accurately measured from the frequency difference between the beat frequency of the peak $\beta$ and the beat frequency of the peak $\gamma$.

Comparative Example

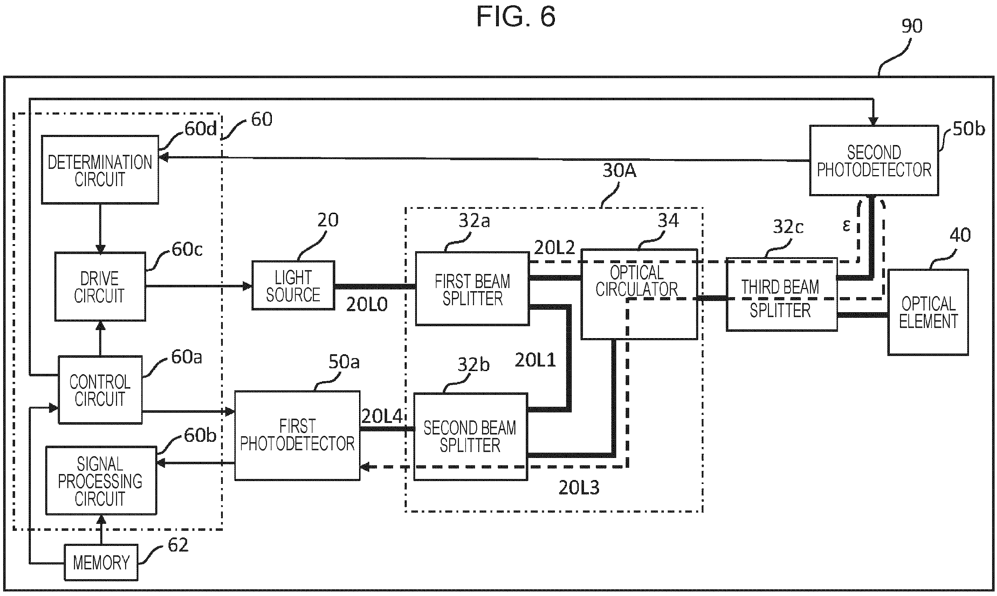

Here, from the standpoint of accurately checking the intensity of the irradiation light 20L2 to be emitted to the outside from the optical element 40, an example configuration in which the third beam splitter 32c is disposed at a position close to the optical element 40 to detect the monitoring light will be described. Fig. 6 is a block diagram schematically showing the configuration of a measurement device in a comparative example. A measurement device 90 shown in Fig. 6 differs from the measurement device 100A shown in Fig. 1 in that the third beam splitter 32c is connected to the optical circulator 34 and the optical element 40. The third beam splitter 32c splits the irradiation light 20L2 output from the optical circulator 34, inputs part thereof to the second photodetector 50b, and inputs the remaining part thereof to the optical element 40. The intensity of the part of the irradiation light 20L2 may be, for example, 1% or more and 10% or less of the intensity of the irradiation light 20L2 output from the optical circulator 34.

In the measurement device 90 shown in Fig. 6, there is a flow of light $\epsilon$ shown in Fig. 6, in addition to the flows of light $\alpha$ to $\delta$ shown in Fig. 1. Note that the flows of light $\beta$ and $\gamma$ pass through the third beam splitter 32c shown in Fig. 6. The dashed line shown in Fig. 6 represents the flow of light $\epsilon$. The flow of light $\epsilon$ is a flow of the irradiation light 20L2 leaving the first beam splitter 32a, reflected by the second photodetector 50b, and reaching the first photodetector 50a. The optical path length of a fifth path corresponding to the flow of light $\epsilon$ is assumed to be a fifth optical path length d5. The flow of light $\epsilon$ causes noise in the detection signal, as do the flows of light $\beta$ and

γ. This is because the third beam splitter 32c is located on the optical paths of the irradiation light 20L2 and the reflected light 20L3. Even if the relationship d1 < d4 < d3 < d2 is satisfied, when d5 > d3, the flow of light ε may reduce the distance range in which the distance and/or the speed of the object 10 can be measured.

EXAMPLES

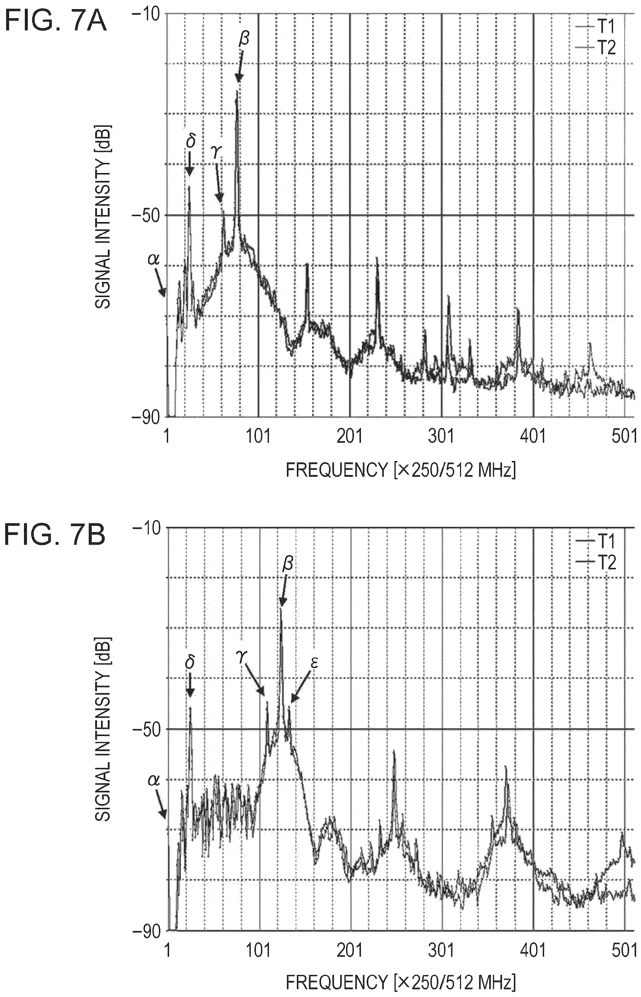

Next, referring to Figs. 7A and 7B, an example in which the distance to the object 10 is measured by using the measurement device 100A according to the first embodiment will be described, together with a comparative example. In the example and the comparative example, the distance to the object 10 was measured under the following conditions.

White Kent paper in a stationary state was used as the object 10. The distance from the optical element 40 to the object 10 was 1 m. In this specification, the distance from the optical element 40 to the object 10 means the distance from the position where the optical element 40 reflects the aforementioned part of the irradiation light 20L2 to the position where the object 10 reflects the aforementioned remaining part of the irradiation light 20L2.

A laser diode that emits a laser beam 20L0 having a wavelength of 1550 nm was used as the light source 20. The frequency of the laser beam 20L0 was modulated by inputting a triangular-wave modulation signal to the drive circuit 60b. The triangular-wave modulation frequency was 50 kHz.

A collimator lens in which the focus can be adjusted was used as the optical element 40. The focus of the collimator lens was adjusted such that the intensity of the beat signal caused by the object 10 was high.

The signal processing circuit 60d sampled 1024 points from the signal output from the first photodetector 50a at a sampling frequency of 500 MHz to acquire data showing a time waveform of the signal. The signal processing circuit 60d further performed fast Fourier transform on the time waveform of the signal to generate data indicating a spectrum of the detection signal in each of the up-chirp period and the down-chirp period.

Figs. 7A and 7B are graphs showing the spectra of the detection signals in the example and the comparative example, respectively. The vertical axis and the horizontal axis shown in Figs. 7A and 7B represent the intensity and the frequency of the signal, respectively. Regarding the horizontal axis, "1" at the right end represents the zero frequency, and one tick mark represents 250 MHz/512. The frequency corresponds to the distance. In Figs. 7A and 7B, the spectrum of the detection signal in the up-chirp period and the spectrum of the detection signal in the down-chirp period are shown in an overlapping manner. In Figs. 7A and 7B, T1 represents the up-chirp period, and T2 represents the down-chirp period. When the object 10 is stationary, the behaviors of the two are substantially the same.

As shown in Figs. 7A and 7B, multiple peaks appear in the spectra of the detection signals. Arrows shown in Fig. 7A represent four representative peaks α to δ among them. Similarly, arrows shown in Fig. 7B represent five representative peaks α to ε among them.

In the example shown in Fig. 7A, of the four peaks α to δ, the peak β due to the object 10 has the highest beat frequency, and the peak γ, which is the indicator of zero distance, has the second highest beat frequency. In the example shown in Fig. 7A, the frequency difference between the beat frequency of the peak β and the beat frequency of the peak γ corresponds to a distance of 1 m. In this way, in the example, the distance to the object 10 can be accurately measured from the frequency difference between the beat frequency of the peak β and the beat frequency of the peak γ.

In contrast, in the comparative example shown in Fig. 7B, of the five peaks α to δ, the peak ε due to the second photodetector 50b has the highest beat frequency. The peak β due to the object 10 has the second highest beat frequency, and the peak γ, which is the indicator of zero distance, has the third highest beat frequency. The reason why the peaks β and γ shown in Fig. 7B are shifted to the longer-wavelength side than the peaks β and γ shown in Fig. 7A is that the optical path lengths of the paths corresponding to the flows of light β and γ are increased by the amount of the third beam splitter 32c disposed between the optical circulator 34 and the optical element 40. In the example shown in Fig. 7B, the frequency difference between the beat frequency of the peak ε and the beat frequency of the peak γ corresponds to a distance of 1.5 m, and the difference between the beat frequency of the peak β and the beat frequency of the peak γ corresponds to a distance of 1 m.

When the beat frequency of the peak ε and the beat frequency of the peak β are close to each other, the peak ε and the peak β are close to each other, making it difficult to determine which peak is the peak β. This results in an erroneous measurement of the distance and/or the speed in the frequency band near the peak ε, lowering the measurement accuracy. As described above, in the comparative example, accurate measurement cannot be performed in the frequency band near the peak ε, and the distance range in which the distance and/or the speed of the object 10 can be measured is reduced.

If increase in size of the measurement device is acceptable, the distance range in which the distance and/or the speed of the object 10 can be measured can be increased by making the third optical path length d3 of the third path corresponding to the flow of light γ longer than the fifth optical path length d5 of the fifth path corresponding to the flow of light ε. This is because, when d3 > d5, the beat frequency of the peak ε is lower than the beat frequency of the peak γ. In the example, because the relationship between the optical path lengths does not need to be taken into consideration, an increase in the size of the measurement device is avoided.

As described above, according to the first embodiment, by appropriately arranging the third beam splitter 32c and the second photodetector 50b, the influence of the internally scattered light caused by the second photodetector 50b can be reduced. As a result, it is possible to realize the measurement device 100A in which it is possible to appropriately adjust the irradiation light 20L2 to be emitted to the outside and to increase the distance range in which the distance and/or the speed of the object 10 can be measured.

Second Embodiment

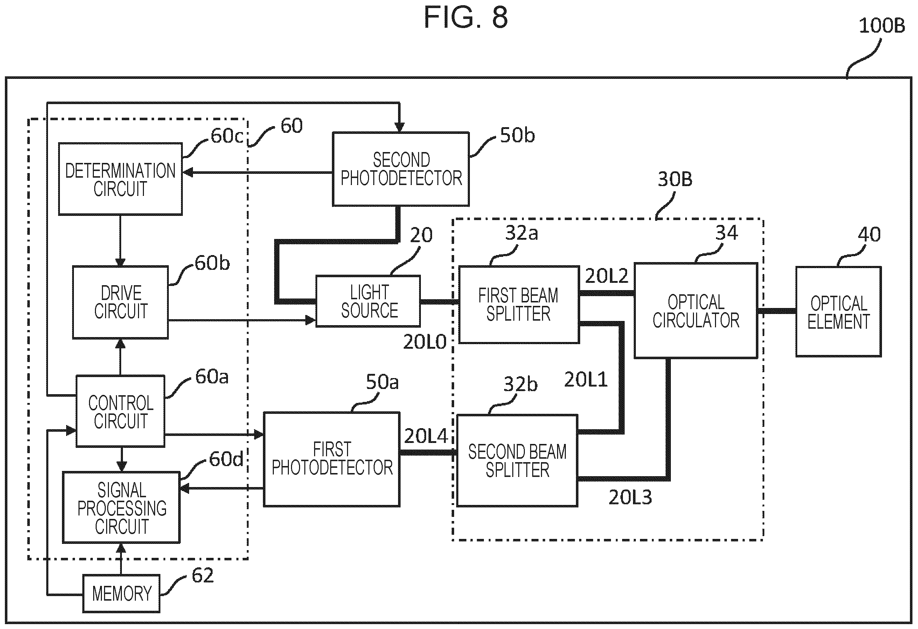

Next, an example configuration of a measurement device according to a second embodiment of the present disclosure will be described with reference to Fig. 8, focusing on the differences from the measurement device according to the first embodiment. Fig. 8 is a block diagram schematically showing the configuration of the measurement device according to the second exemplary embodiment of the present disclosure. A measurement device 100B shown in Fig. 8 differs from the measurement device 100A shown in Fig. 1 in that the second photodetector 50b detects the monitoring light, which is part of the laser beam 20L0 emitted from the light source 20, without the third beam splitter 32c therebetween. An interference optical system 30B shown in Fig. 8 has the same configuration as the interference optical system 30A shown in Fig. 1.

When a laser diode is used as the light source 20, the light emitted from the rear surface of the laser diode can be detected as monitoring light. This is because the intensity of the laser beam emitted from the rear surface of the laser diode is proportional to the intensity of the laser beam emitted from the front surface thereof. In this specification, the "laser beam 20L0 emitted from the light source 20" includes not only the laser beam emitted from the front surface of the laser diode, but also the laser beam emitted from the rear surface of the laser diode. Hence, it can be said that the laser beam emitted from the rear surface of the laser diode is "part of the laser beam 20L0".

Alternatively, a laser diode including a monitoring photodiode may be used as the light source 20. The monitoring photodiode outputs a signal indicating the intensity of part of the laser beam 20L0 emitted from the light source 20. The monitoring photodiode can be used as the second photodetector 50b.

When the intensity of the laser beam 20L0 is adjusted with the attenuator, the intensity of the irradiation light 20L2 to be emitted to the outside changes according to the adjustment performed by the attenuator. Hence, the predetermined intensity used for determination by the determination circuit 60c is set according to the adjustment performed by the attenuator.

From above, according to the second embodiment, similarly to the first embodiment, it is possible to realize the measurement device 100B in which it is possible to appropriately adjust the intensity of the irradiation light 20L2 to be emitted to the outside and to increase the distance range in which the distance and/or the speed of the object 10 can be measured. Because the third beam splitter 32c for extracting the monitoring light is not required, it is possible to reduce the number of components of the measurement device 100B, thus simplifying the configuration of the measurement device 100B. In the configuration in which the laser diode including the monitoring photodiode is used as the light source 20, there is no need to separately provide the second photodetector 50b. Thus, it is possible to further reduce the number of components of the measurement device 100B, thus further simplifying the configuration of the measurement device 100B.

Third Embodiment

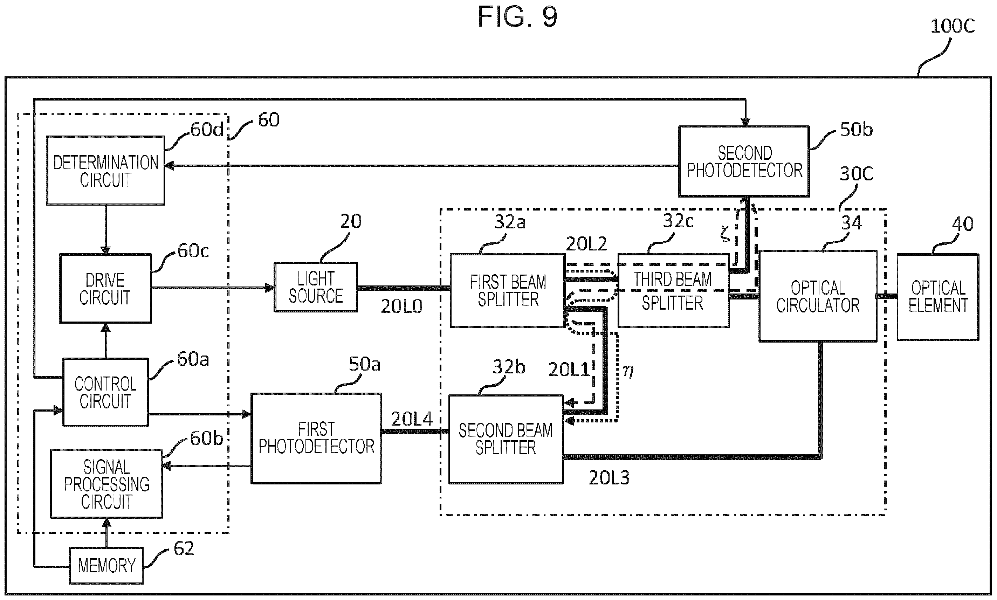

Next, an example configuration of a measurement device according to a third embodiment of the present disclosure will be described with reference to Fig. 9, focusing on the differences from the measurement device according to the first embodiment. Fig. 9 is a block diagram schematically showing the configuration of the measurement device according to the third exemplary embodiment of the present disclosure. A measurement device 100C shown in Fig. 9 differs from the measurement device 100A shown in Fig. 1 in that an interference optical system 30C includes a third beam splitter 32c in addition to the first beam splitter 32a, the second beam splitter 32b, and the optical circulator 34. The third beam splitter 32c is connected to the first beam splitter 32a and the optical circulator 34. The third beam splitter 32c splits the irradiation light 20L2 output from the first beam splitter 32a in the interference optical system 30C, inputs monitoring light, which is part of the irradiation light, to the second photodetector 50b, and inputs the remaining part of the irradiation light to the optical circulator 34. The monitoring light is part of the irradiation light 20L2 in the interference optical system 30C. By associating the intensity of the monitoring light with the intensity of the irradiation light 20L2 to be emitted to the outside, it is possible to check, from the intensity of the monitoring light, the intensity of the irradiation light 20L2 to be emitted to the outside.

In the measurement device 100C shown in Fig. 9, there are flows of light $\zeta$ and $\eta$ shown in Fig. 9, in addition to the flows of light $\alpha$ to $\delta$ shown in Fig. 1. Note that the flows of light $\beta$ and $\gamma$ pass through the third beam splitter 32c shown in Fig. 9. The dashed and dotted lines shown in Fig. 9 represent the flows of light $\zeta$ and $\eta$, respectively. The flow of light $\zeta$ is a flow of the irradiation light 20L2 reflected by the second photodetector 50b and the first beam splitter 32a in this order and reaching the first photodetector 50a. The flow of light $\eta$ is a flow of the irradiation light 20L2 reflected by the third beam splitter 32c and the first beam splitter 32a in this order and reaching the first photodetector 50a.

Because the third beam splitter 32c is located on the optical path of the irradiation light 20L2, the flows of light $\zeta$ and $\eta$ generated by the third beam splitter 32c may cause noise in the detection signal. Note that the flows of light $\zeta$ and $\eta$ each include reflection by two optical members. Hence, the intensity of light reaching the first photodetector 50a along the flows of light $\zeta$ and $\eta$ is reduced to an intensity that does not cause a practical problem. For example, it is assumed that, when incident light is reflected by one optical member to generate reflected light, the intensity of the reflected light decreases to -60 dB with respect to the intensity of the incident light. When the incident light is reflected by two optical members to generate the reflected light, the intensity of the reflected light decreases to -120 dB with respect to the intensity of the incident light. Hence, the noise caused by the flows of light $\zeta$ and $\eta$ is smaller than the noise generated in the first photodetector 50a and the signal processing circuit 60d. Hence, it is considered that the noise is not detected as the beat signal.

From above, according to the third embodiment, similarly to the first embodiment, it is possible to realize the measurement device 100C in which it is possible to appropriately adjust the intensity of the irradiation light 20L2 to be emitted to the outside and to increase the distance range in which the distance and/or the speed of the object 10 can be measured.

Fourth Embodiment

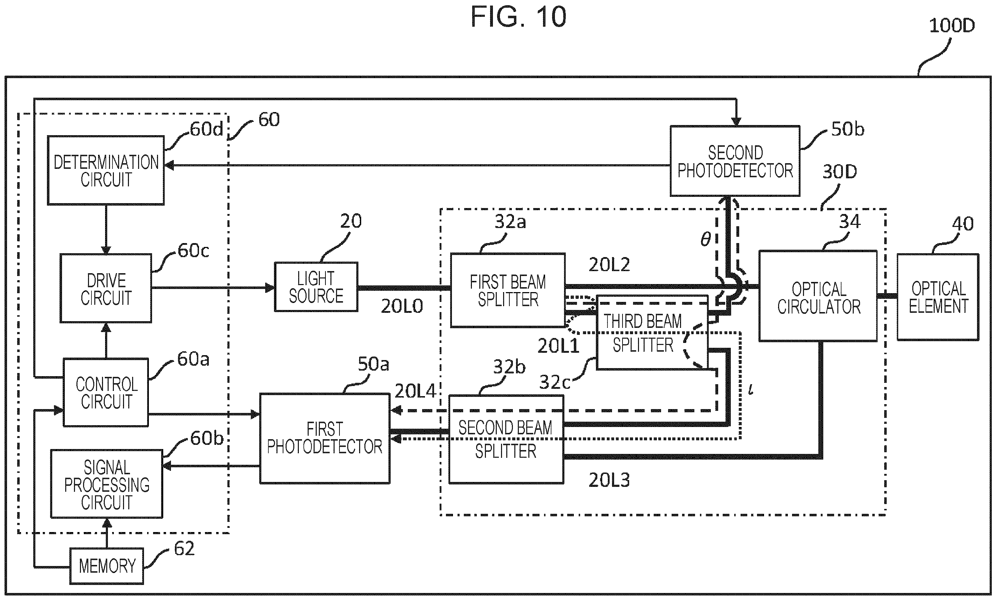

Next, an example configuration of a measurement device according to a fourth embodiment of the present disclosure will be described with reference to Fig. 10, focusing on the differences from the measurement device according to the first embodiment. Fig. 10 is a block diagram schematically showing the configuration of the measurement device according to the fourth exemplary embodiment of the present disclosure. A measurement device 100D shown in Fig. 10 differs from the measurement device 100A shown in Fig. 1 in that an interference optical system 30D includes the third beam splitter 32c in addition to the first beam splitter 32a, the second beam splitter 32b, and the optical circulator 34. The third beam splitter 32c is connected to the first beam splitter 32a and the second beam splitter 32b. The third beam splitter 32c splits the reference light 20L1 output from the first beam splitter 32a in the interference optical system 30D, inputs monitoring light, which is part of the reference light, to the second photodetector 50b, and inputs the remaining part of the reference light to the second beam splitter 32b. The monitoring light is part of the reference light 20L1 in the interference optical system 30D. By associating the intensity of the monitoring light with the intensity of the irradiation light 20L2 to be emitted to the outside, it is possible to check, from the intensity of the monitoring light, the intensity of the irradiation light 20L2 to be emitted to the outside.

In the measurement device 100D shown in Fig. 10, there are flows of light $\theta$ and $\iota$ shown in Fig. 10, in addition to the flows of light $\alpha$ to $\delta$ shown in Fig. 1. Note that the flow of light $\alpha$ passes through the third beam splitter 32c shown in Fig. 10. The dashed and dotted lines shown in Fig. 10 represent the flows of light $\theta$ and $\iota$, respectively. The flow of light $\theta$ is a flow of the reference light 20L1 reflected by the second photodetector 50b and the first beam splitter 32a in this order and reaching the first photodetector 50a. The flow of light $\iota$ is a flow of the reference light 20L1 reflected by the third beam splitter 32c and the first beam splitter 32a in this order and reaching the first photodetector 50a.

Because the third beam splitter 32c is located on the optical path of the reference light 20L1, the flows of light $\theta$ and $\iota$ generated by the third beam splitter 32c may cause noise in the detection signal. Note that the flows of light $\theta$ and $\iota$ each include reflection by two optical members. Hence, the intensity of light reaching the first photodetector 50a along the flows of light $\theta$ and $\iota$ is reduced to an intensity that does not cause a practical problem.

From above, according to the fourth embodiment, similarly to the first embodiment, it is possible to realize the measurement device 100D in which it is possible to appropriately adjust the intensity of the irradiation light 20L2 to be emitted to the outside and to increase the distance range in which the distance and/or the speed of the object 10 can be measured.

Fifth Embodiment

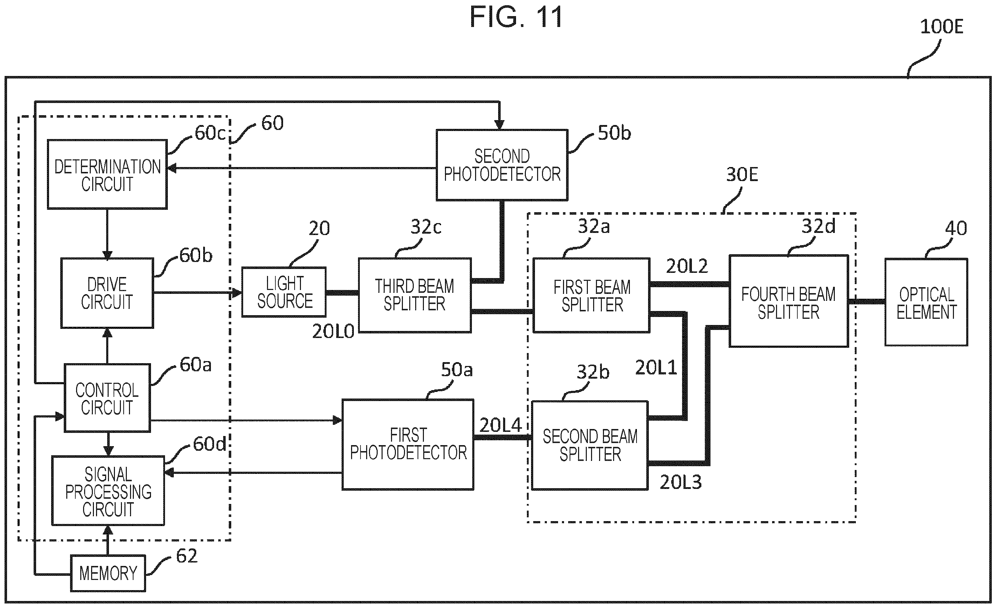

Next, an example configuration of a measurement device according to a fifth embodiment of the present disclosure will be described with reference to Fig. 11, focusing on the differences from the measurement device according to the first embodiment. Fig. 11 is a block diagram schematically showing the configuration of the measurement device according to the fifth exemplary embodiment of the present disclosure. A measurement device 100E shown in Fig. 11 differs from the measurement device 100A shown in Fig. 1 in that an interference optical system 30E includes a fourth beam splitter 32d instead of the optical circulator 34 shown in Fig. 1. In this specification, the fourth beam splitter 32d is also referred to as "still another beam splitter".

The intensity of the reflected light 20L3 input to the second beam splitter 32b by the fourth beam splitter 32d is lower than the intensity of the reflected light 20L3 input to the second beam splitter 32b by the optical circulator 34. When the split ratio of the fourth beam splitter 32d is 50:50, the intensity of the reflected light 20L3 output from the fourth beam splitter 32d is half the intensity of the reflected light 20L3 input to the fourth beam splitter 32d. Hence, the intensity of the beat signal caused by the object 10 is low. Meanwhile, because the fourth beam splitter 32d is less expensive than the optical circulator 34, the manufacturing cost of the measurement device 100E can be reduced.

If the fourth beam splitter 32d is used instead of the optical circulator 34, part of the reflected light 20L3 may return to the light source 20 via the first beam splitter 32a. Such return light may be removed by providing an optical isolator between the light source 20 and the first beam splitter 32a.

From above, according to the fifth embodiment, similarly to the first embodiment, it is possible to realize the measurement device 100E in which it is possible to appropriately adjust the intensity of the irradiation light 20L2 to be emitted to the outside and to increase the distance range in which the distance and/or the speed of the object 10 can be measured.

Sixth Embodiment

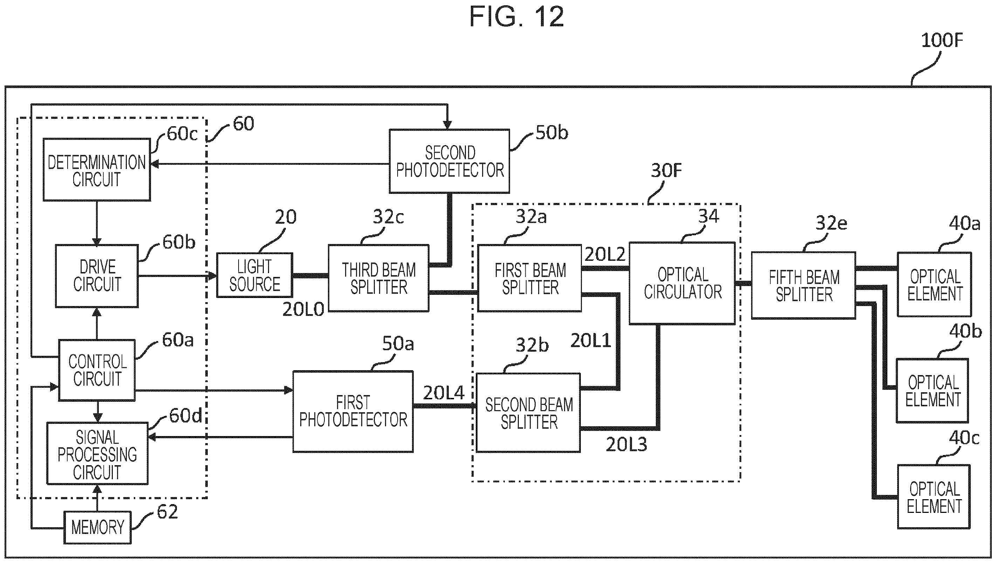

Next, an example configuration of a measurement device according to a sixth embodiment of the present disclosure will be described with reference to Fig. 12, focusing on the differences from the measurement device according to the first embodiment. Fig. 12 is a block diagram schematically showing the configuration of the measurement device according to the sixth exemplary embodiment of the present disclosure. A measurement device 100F shown in Fig. 12 differs from the measurement device 100A shown in Fig. 1 in that the measurement device 100F includes a fifth beam splitter 32e, a first optical element 40a, a second optical element 40b, and a third optical element 40c, instead of the single optical element 40 shown in Fig. 1. An interference optical system 30F shown in Fig. 12 has the same configuration as the interference optical system 30A shown in Fig. 1. In this specification, the first optical element 40a, the second optical element 40b, and the third optical element 40c are also collectively referred to as the "optical elements 40a to 40c". The fifth beam splitter 32e is connected to the optical circulator 34. The optical elements 40a to 40c are connected to the fifth beam splitter 32e. In other words, the optical elements 40a to 40c are connected to the optical circulator 34 via the fifth beam splitter 32e.

The fifth beam splitter 32e splits the irradiation light 20L2 into the first to third light. The optical elements 40a to 40c respectively emit the first to third light to the outside and receive the first to third reflected light generated by the first to third light being reflected by the object 10. The optical elements 40a to 40c respectively input the first to third reflected light to the optical circulator 34 included in the interference optical system 30F via the fifth beam splitter 32e. Each of the first to third light is part of the irradiation light 20L2. The intensities of the first to third light may be equal to each other or may be different from each other. The number into which the fourth beam splitter 32d splits the irradiation light is not limited and is any plural number that is two or more. The same applies to the number of optical elements 40a to 40c. In this specification, "at least one optical element that emits at least part of the irradiation light" means a single optical element that emits the irradiation light 20L2, as in the first embodiment, or a plurality of optical elements that each emit part of the irradiation light 20L2, as in the sixth embodiment.

The optical path lengths of the three paths extending from the fifth beam splitter 32e to the optical elements 40a to 40c may be equal to each other or may be different from each other. When the optical path lengths of the three paths are different from each other, the zero distances of the first to third light emitted to the outside from the optical elements 40a to 40c can be made different from each other. Therefore, in the spectrum of the detection signal, the first to third frequency bands can be allocated to the first to third light emitted to the outside, respectively. As a result, it is possible to know which light, among the first to third light, has been used to measure the distance and/or the speed of the object 10 from the frequency band in which the peak appears.

From above, according to the sixth embodiment, similarly to the first embodiment, it is possible to realize the measurement device 100F in which it is possible to appropriately adjust the intensity of the irradiation light 20L2 to be emitted to the outside and to increase the distance range in which the distance and/or the speed of the object 10 can be measured.

Seventh Embodiment

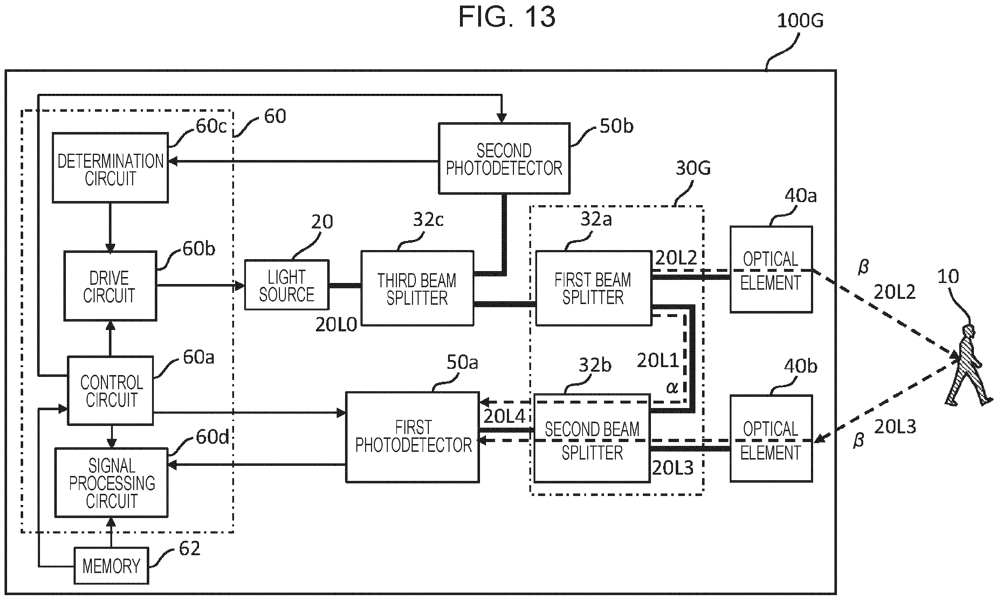

Next, an example configuration of a measurement device according to a seventh embodiment of the present disclosure will be described with reference to Fig. 13, focusing on the differences from the measurement device according to the first embodiment. Fig. 13 is a block diagram schematically showing the configuration of the measurement device according to the seventh exemplary embodiment of the present disclosure. Fig. 13 shows a person as the object 10 to be measured. A measurement device 100G shown in Fig. 13 differs from the measurement device 100A shown in Fig. 1 in the following two points. The first point is that an interference optical system 30G includes the first beam splitter 32a and the second beam splitter 32b, but does not include the optical circulator 34 shown in Fig. 1. The second point is that the measurement device 100G includes a second optical element 40b in addition to a first optical element 40a corresponding to the optical element 40 shown in Fig. 1. In this specification, the first optical element 40a is also simply referred to as the "optical element", and the second optical element 40b is also referred to as "the other optical element".

The first optical element 40a is connected to the first beam splitter 32a, and the second optical element 40b is connected to the second beam splitter 32b. The first optical element 40a emits, to the outside, the irradiation light 20L2 output from the first beam splitter 32a. The second optical element 40b receives the reflected light 20L3 generated by the irradiation light 20L2 being reflected by the object 10, and inputs the reflected light 20L3 to the second beam splitter 32b included in the interference optical system 30G.

In the measurement device 100G shown in Fig. 13, there are flows of light α and β shown in Fig. 1. Note that the flow of light β does not pass through the optical circulator 34 shown in Fig. 1, but passes through the first optical element 40a and the second optical element 40b. In the measurement device 100G, there are no flows of light δ and γ shown in Fig. 1.

In the measurement device 100G, unlike the measurement device 100A, the path of the irradiation light 20L2 from the interference optical system 30G to the object 10 and the path of the reflected light 20L3 from the object 10 to the interference optical system 30G do not overlap each other. In the measurement device 100G, which does not employ a coaxial optical system, the intensity of the beat signal caused by the object 10 is lower than that in the measurement device 100A. Meanwhile, because the optical circulator 34 shown in Fig. 1 and the fourth beam splitter 32d shown in Fig. 11 are not used, the manufacturing cost of the measurement device 100G can be reduced.

The measurement device 100G may include a plurality of first optical elements 40a instead of a single first optical element 40a, as in the measurement device 100G shown in Fig. 12. The measurement device 100G may further include a plurality of second optical elements 40b respectively corresponding to the plurality of first optical elements 40a, instead of a single second optical element 40b. In other words, the measurement device 100G includes at least one first optical element 40a and at least one second optical element 40b.

From above, according to the seventh embodiment, similarly to the first embodiment, it is possible to realize the measurement device 100G in which it is possible to appropriately adjust the intensity of the irradiation light 20L2 to be emitted to the outside and to increase the distance range in which the distance and/or the speed of the object 10 can be measured.

Eighth Embodiment

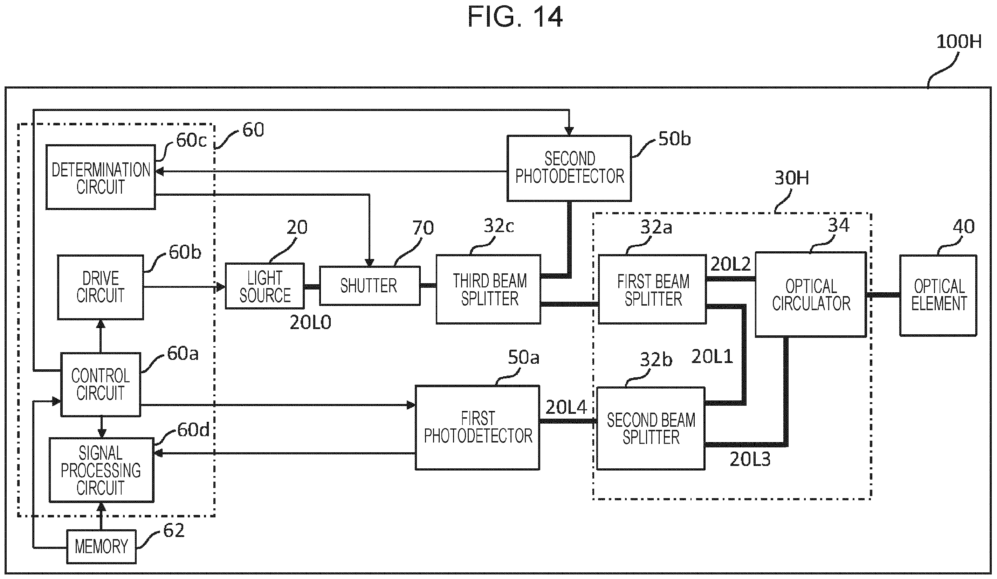

Next, an example configuration of a measurement device according to an eighth embodiment of the present disclosure will be described with reference to Fig. 14, focusing on the differences from the measurement device according to the first embodiment. Fig. 14 is a block diagram schematically showing the configuration of the measurement device according to the eighth exemplary embodiment of the present disclosure. A measurement device 100H shown in Fig. 14 differs from the measurement device 100A shown in Fig. 1 in that the measurement device 100H further includes a shutter 70. An interference optical system 30H shown in Fig. 14 has the same configuration as the interference optical system 30A shown in Fig. 1.

The shutter 70 opens and closes the optical path of the laser beam 20L0 emitted from the light source 20 according to the restriction signal output from the determination circuit 60c. In the example shown in Fig. 14, the shutter 70 is connected to the light source 20 and the third beam splitter 32c. The shutter 70 may be connected to the first beam splitter 32a and the third beam splitter 32c.

Alternatively, the shutter 70 may open and close the optical path of the irradiation light 20L2 according to the restriction signal. The shutter 70 may be connected to the first beam splitter 32a and the optical circulator 34, or may be connected to the optical circulator 34 and the optical element 40, for example.

The restriction signal may be, for example, a digital signal indicating that the intensity of the irradiation light 20L2 to be emitted to the outside is higher than the maximum intensity for class 1. The shutter 70 closes the optical path of the laser beam 20L0 or the irradiation light 20L2 according to the restriction signal. When the determination circuit 60c does not output the restriction signal, the shutter 70 maintains a state in which the optical path of the laser beam 20L0 or the irradiation light 20L2 is open.

From above, according to the eighth embodiment, similarly to the first embodiment, it is possible to realize the measurement device 100H in which it is possible to appropriately adjust the intensity of the irradiation light 20L2 to be emitted to the outside and to increase the distance range in which the distance and/or the speed of the object 10 can be measured.

Ninth Embodiment

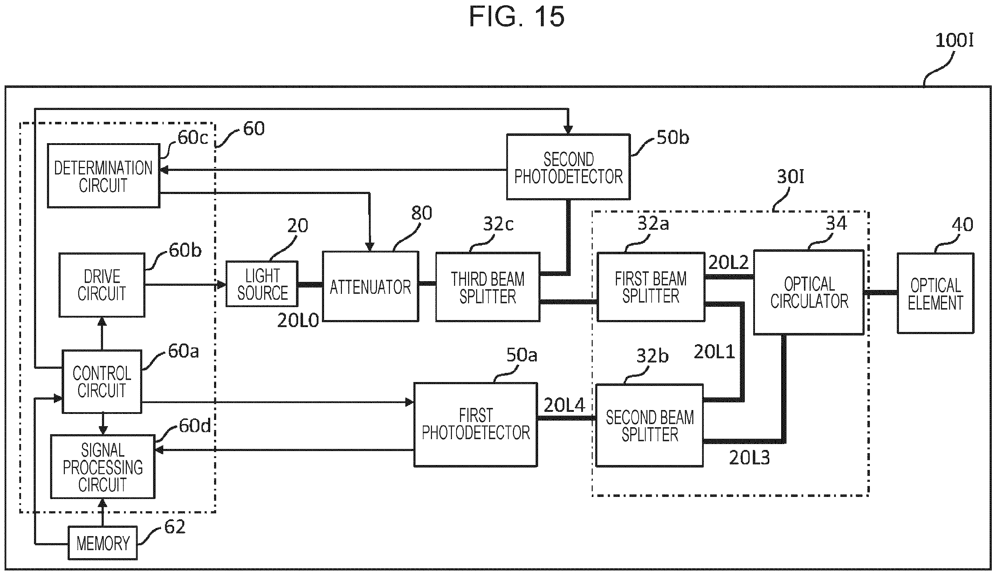

Next, an example configuration of a measurement device according to a ninth embodiment of the present disclosure will be described with reference to Fig. 15, focusing on the differences from the measurement device according to the first embodiment. Fig. 15 is a block diagram schematically showing the configuration of the measurement device according to the ninth exemplary embodiment of the present disclosure. A measurement device 100I shown in Fig. 15 differs from the measurement device 100A shown in Fig. 1 in that the measurement device 100I further includes an attenuator 80. An interference optical system 30I shown in Fig. 15 has the same configuration as the interference optical system 30A shown in Fig. 1.

The attenuator 80 attenuates the intensity of the laser beam 20L0 emitted from the light source 20 according to the restriction signal output from the determination circuit 60c. In the example shown in Fig. 15, the attenuator 80 is connected to the light source 20 and the third beam splitter 32c. The attenuator 80 may be connected to the first beam splitter 32a and the third beam splitter 32c.

Alternatively, the attenuator 80 may attenuate the intensity of the irradiation light 20L2 according to the restriction signal. The attenuator 80 may be connected to the first beam splitter 32a and the optical circulator 34, or may be connected to the optical circulator 34 and the optical element 40, for example.

The restriction signal may be, for example, a digital signal indicating that the intensity of the irradiation light 20L2 to be emitted to the outside is higher than the maximum intensity for class 1. The attenuator 80 attenuates the intensity of the laser beam 20L0 or the irradiation light 20L2 according to the restriction signal. When the determination circuit 60c does not output the restriction signal, the attenuator 80 maintains a state in which the amount of light of the laser beam 20L0 or the irradiation light 20L2 is not attenuated (or maintains the amount of attenuation at the time of normal operation).

From above, according to the ninth embodiment, similarly to the first embodiment, it is possible to realize the measurement device 100I in which it is possible to appropriately adjust the intensity of the irradiation light 20L2 to be emitted to the outside and to increase the distance range in which the distance and/or the speed of the object 10 can be measured.

The components of the measurement devices 100A to 100I described above may be combined as desired, as long as there is no contradiction.

Industrial Applicability

The measurement device according to the embodiments of the present disclosure can be used for a ranging system mounted on a vehicle such as an automobile, an unmanned aerial vehicle (UAV), or an automated guided vehicle (AGV), or for vehicle detection.

Reference Signs List

| | |
|---|---|
| 10 | Object |
| 20 | Light source |
| 20L0 | Laser beam |
| 20L1 | Reference light |
| 20L2 | Irradiation light |
| 20L3 | Reflected light |
| 20L4 | Interference light |
| 30A to 30I | Interference optical system |
| 32a | First beam splitter |
| 32b | Second beam splitter |
| 32c | Third beam splitter |
| 32d | Fourth beam splitter |
| 32e | Fifth beam splitter |
| 34 | Optical circulator |
| 40 | Optical element |
| 40a | First optical element |
| 40b | Second optical element |
| 40c | Third optical element |
| 50a | First photodetector |
| 50b | Second photodetector |
| 60 | Processing circuit |
| 60a | Control circuit |
| 60b | Drive circuit |
| 60c | Determination circuit |
| 60d | Signal processing circuit |
| 62 | Memory |
| 70 | Shutter |
| 80 | Attenuator |
| 90, 100A to 100I | Measurement device |

**Claims**

1. A measurement device comprising:

   a light source that emits light;
   an interference optical system including a beam splitter that splits the light emitted from the light source into reference light and irradiation light for irradiating an object, the interference optical system generating interference light by causing reflected light generated by at least part of the irradiation light being reflected by the object and the reference light to interfere with each other;
   at least one optical element that emits the at least part of the irradiation light;
   a first photodetector that detects the interference light; a second photodetector that detects monitoring light that is any one of part of the light emitted from the light source, part of the irradiation light in the interference optical system, and part of the reference light in the interference optical system; and
   a processing circuit that adjusts an intensity of the irradiation light to be emitted to an outside according to an intensity of the monitoring light.

2. The measurement device according to claim 1, further comprising another beam splitter between the light source and the beam splitter,
   wherein the other beam splitter separates the monitoring light from the light emitted from the light source.

3. The measurement device according to claim 1, wherein the second photodetector detects the monitoring light in the light emitted from the light source without another beam splitter therebetween.

4. The measurement device according to claim 1, wherein

   the interference optical system further includes another beam splitter, and
   the other beam splitter separates the monitoring light from the irradiation light in the interference optical system.

5. The measurement device according to claim 1, wherein

   the interference optical system further includes another beam splitter, and

the other beam splitter separates the monitoring light from the reference light in the interference optical system.

6. The measurement device according to any one of claims 1 to 5,
wherein the interference optical system includes a circulator or still another beam splitter connected to the beam splitter and the at least one optical element.

7. The measurement device according to any one of claims 1 to 6,
wherein the at least one optical element includes a plurality of optical elements, and each of the plurality of optical elements emits part of the irradiation light.

8. The measurement device according to any one of claims 1 to 7,
wherein the at least one optical element receives the reflected light and inputs the reflected light to the interference optical system.

9. The measurement device according to any one of claims 1 to 7, further comprising at least one other optical element that receives the reflected light and inputs the reflected light to the interference optical system.

10. The measurement device according to any one of claims 1 to 9,
wherein the processing circuit comprises:

a determination circuit that performs determination by comparing the intensity of the monitoring light and a predetermined intensity and outputs a restriction signal according to a determination result; and
a drive circuit that causes the light source to change an intensity of the light according to the restriction signal.

11. The measurement device according to any one of claims 1 to 9, further comprising a shutter that opens and closes an optical path of the light emitted from the light source or the irradiation light, wherein

the processing circuit includes a determination circuit that performs determination by comparing the intensity of the monitoring light and a predetermined intensity and outputs a restriction signal according to a determination result, and
the shutter opens and closes the optical path according to the restriction signal.

12. The measurement device according to any one of claims 1 to 9, further comprising an attenuator that attenuates an intensity of the light emitted from the light source or the irradiation light, wherein

the processing circuit includes a determination circuit that performs determination by comparing the intensity of the monitoring light and a predetermined intensity and outputs a restriction signal according to a determination result, and
the attenuator attenuates the intensity of the light emitted from the light source or the irradiation light according to the restriction signal.

13. The measurement device according to any one of claims 1 to 12, wherein

the light source is capable of changing a frequency of the light with time, and
the processing circuit processes a signal output from the first photodetector.

FIG. 1

# FIG. 2

# FIG. 3

FIG. 4

FIG. 5

# FIG. 6

FIG. 7A

FIG. 7B

## FIG. 8

EP 4 502 657 A1

## FIG. 9

EP 4 502 657 A1

# FIG. 10

EP 4 502 657 A1

FIG. 11

EP 4 502 657 A1

FIG. 12

EP 4 502 657 A1

FIG. 13

FIG. 14

100H

OPTICAL ELEMENT — 40

30H

OPTICAL CIRCULATOR — 34

20L2

FIRST BEAM SPLITTER — 32a

20L1

SECOND BEAM SPLITTER — 32b

20L3

20L4

SECOND PHOTODETECTOR — 50b

THIRD BEAM SPLITTER — 32c

FIRST PHOTODETECTOR — 50a

SHUTTER — 70

LIGHT SOURCE — 20

20L0

60

DETERMINATION CIRCUIT — 60c

DRIVE CIRCUIT — 60b

CONTROL CIRCUIT — 60a

SIGNAL PROCESSING CIRCUIT — 60d

MEMORY — 62

FIG. 15

EP 4 502 657 A1

**INTERNATIONAL SEARCH REPORT**

International application No.

**PCT/JP2022/038078**

**A.    CLASSIFICATION OF SUBJECT MATTER**

*G01S 17/34*(2020.01)i; *G01S 7/481*(2006.01)i
FI:    G01S17/34; G01S7/481 A

According to International Patent Classification (IPC) or to both national classification and IPC

**B.    FIELDS SEARCHED**

Minimum documentation searched (classification system followed by classification symbols)

G01S 7/48 - G01S 7/51, G01S 17/00 - G01S 17/95, G01N 21/17 - G01N 21/61

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2017-047061 A (CANON KK) 09 March 2017 (2017-03-09)<br>     paragraphs [0012]-[0028], fig. 1-6 | 1-2, 4-6, 8, 10-13 |
| Y | | 3 |
| X | US 2021/0026014 A1 (CARL ZEISS AG) 28 January 2021 (2021-01-28)<br>     paragraphs [0004], [0012], [0042], [0050]-[0053], [0068]-[0069], fig. 1, 5 | 1, 4, 6, 8, 10, 13 |
| Y | | 7, 9 |
| Y | JP 2005-111165 A (HAMAMATSU PHOTONICS KK) 28 April 2005 (2005-04-28)<br>     fig. 1-2 | 3 |
| Y | US 2020/0200882 A1 (ROBERT BOSCH GMBH) 25 June 2020 (2020-06-25)<br>     paragraphs [0001]-[0003], [0028], fig. 1 | 7, 9 |
| A | WANG, Jon Y. et al. Imaging $CO_2$ laser radar field tests. APPLIED OPTICS. 01 August 1984,<br>vol. 23, no. 15, pp. 2565-2571<br>     fig. 1 | 1, 4, 6, 8 |

☐ Further documents are listed in the continuation of Box C.    ☑ See patent family annex.

| | |
|---|---|
| *        Special categories of cited documents:<br>"A"    document defining the general state of the art which is not considered<br>        to be of particular relevance<br>"E"    earlier application or patent but published on or after the international<br>        filing date<br>"L"    document which may throw doubts on priority claim(s) or which is<br>        cited to establish the publication date of another citation or other<br>        special reason (as specified)<br>"O"    document referring to an oral disclosure, use, exhibition or other<br>        means<br>"P"    document published prior to the international filing date but later than<br>        the priority date claimed | "T"    later document published after the international filing date or priority<br>        date and not in conflict with the application but cited to understand the<br>        principle or theory underlying the invention<br>"X"    document of particular relevance; the claimed invention cannot be<br>        considered novel or cannot be considered to involve an inventive step<br>        when the document is taken alone<br>"Y"    document of particular relevance; the claimed invention cannot be<br>        considered to involve an inventive step when the document is<br>        combined with one or more other such documents, such combination<br>        being obvious to a person skilled in the art<br>"&"    document member of the same patent family |

| Date of the actual completion of the international search | Date of mailing of the international search report |
|---|---|
| **18 November 2022** | **06 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/038078**

| Patent document cited in search report | | | Publication date (day/month/year) | Patent family member(s) | | | Publication date (day/month/year) |
|---|---|---|---|---|---|---|---|
| JP | 2017-047061 | A | 09 March 2017 | JP | 6632262 | B2 | |
| US | 2021/0026014 | A1 | 28 January 2021 | DE | 102019210999 | A1 | |
| JP | 2005-111165 | A | 28 April 2005 | (Family: none) | | | |
| US | 2020/0200882 | A1 | 25 June 2020 | DE | 102018222415 | A1 | |
| | | | | CN | 111355535 | A | |

Form PCT/ISA/210 (patent family annex) (January 2015)

**REFERENCES CITED IN THE DESCRIPTION**

**Patent documents cited in the description**

- JP 6274368 B
- JP 2019045200 A
- JP 2022010910 A